# EUROPEAN PATENT SPECIFICATION

(11) **EP 0 515 411 B1**
(45) Date of publication and mention of the grant of the patent: **22.06.1994**
(21) Application number: 91903257.3
(22) Date of filing: 13.02.1991
(51) Int. Cl.: A01C 9/00, A01C 9/02

(54) **POTATO PLANTER**
KARTOFFELLEGEMASCHINE
DISPOSITIF POUR PLANTER LES POMMES DE TERRE

(30) Priority: 14.02.1990 GB 9003395
(43) Date of publication of application: 02.12.1992
(73) Proprietor: KVERNELAND UNDERHAUG AS, N-4350 Naerbo (NO)
(72) Inventor: GUDMESTAD, Finn, N-4350 Naerbo (NO); RIDSAL, Jorgen, N-4350 Naerbo (NO)
(74) Representative: Orr, William McLean
(86) International application number: GB9100217
(87) International publication number: WO9111899

(56) References cited:
- DE-C- 80 302
- DE-C- 90 993
- FR-A- 2 219 613
- GB-A- 1 209 699
- US-A- 4 243 154

## Description

This invention relates to a potato planter.

A potato planter is usually attached to or towed behind the rear of a tractor, and is operated automatically to form a furrow in the ground, to distribute seed potatoes into the furrow at required spacings along the furrow, then to fill the furrow with soil after planting of the potatoes, and to "earth-up" the soil in an inverted V-shape over each row of planted potatoes if required.

Potato planters can be single row or multi-row machines, and in the latter case can plant potatoes simultaneously in each of the rows. The planter usually has a hopper in which seed potatoes are loaded, and which feeds the potatoes under gravity to a lower distribution chamber at the bottom of the hopper. This chamber has an outlet through which potatoes are fed to a planter unit which first elevates the potatoes and then permits controlled lowering of the potatoes before they are planted in the furrow.

The planter unit comprises an endless train of potato lifter cups which move upwardly from a receiving position adjacent to the outlet of the distribution chamber along an elevation run, and then at the top of this run each cup is inverted prior to travel down a descending run to a potato release and planting position. Each cup is then returned to its original position as it returns to the elevation run.

The purpose of the elevation run of the cups is to ensure as far as possible that each cup holds only a single potato by the time it reaches the top of the elevation run, and any excess potatoes are shaken-off during upward travel of the cups.

After inversion of each cup, the potato held by the cup falls under gravity onto the now upwardly facing surface of the underside of the preceding cup. A wall encloses the cups as they carry out the descending run, and the potatoes are therefore simply supported on the "backs" of the cups, and can be easily released to fall under gravity as the cups move from the descending run to the elevation run. Such a device is known from US-A-4,243,154 as set forth in the preamble portion of claim 1.

With a multi-row machine. a separate distribution chamber and associated cup-type planter unit is provided for each row, and usually a furrow-opener is provided in front of each planter unit to form the furrow in which the row of potatoes is to be planted, and covering-up disc coverers or ridging shovels are arranged behind the planter unit to operate after the potatoes have been planted.

A typical existing potato planter of the above general type comprises the Underhaug 1400 potato planter made by Underhaugs Fabrikk AS of Naerbo, Norway.

One problem with existing potato planters comprises the means adopted to remove unused seed potatoes from the hopper after a particular planting operation has been completed. Thus, it may be required to plant one field, or one part of a field, with one type of potato, and then another field, or part of the field, with a different type of potato, and usually there will be a surplus of unused potatoes remaining in the hopper after completion of any particular planting operation and which must be emptied before the hopper can be loaded with a different type of potato.

One existing technique used to empty the hopper comprises operation of the planter unit while the potato planter is stationary, so that the contents of the hopper can be discharged onto the ground or into a suitable receptacle, and then stored for future use. Since the planter unit is normally driven from the tractor, when the potato planter is being propelled over a field, it is usually necessary to provide a manually operated drive mechanism to operate the planter unit while the planter is stationary. This comprises a hand-operated crank mechanism, the operation of which is laborious and time consuming. It is time consuming, in that all of the potatoes remaining in the hopper have to be elevated, and then allowed to descend, and then be discharged one by one, after being handled individually by the planter unit.

An alternative means for emptying the hopper comprises the provision of a closable discharge port or hole in an inclined rear wall of the hopper. This rear wall is inclined so that relatively gentle gravity discharge of potatoes normally takes place towards the distribution chamber. It is important that the seed potatoes should be handled as gently as possible, so as to minimise the risk of damage to the potatoes and to the growing tubers, and therefore usually the rear wall of the hopper is inclined at a relatively shallow angle e.g. 30 to 50° to the horizontal. However, the provision of the discharge port in the rear hopper wall necessarily interrupts what would otherwise be a smooth guiding surface over which the potatoes move, and there is therefore a permanent source of potential abrasion and damage to the potatoes which move over the discharge port (which is of course closed during normal operation) towards the distribution chamber.

In addition, the discharge port is usually located about one third to one half way up the rear wall, so as to minimise rough handling and turbulent flow which would be likely to occur if the port should be located closer to the entrance to the distribution chamber. Therefore, only that portion of unused potatoes which are above the discharge port can discharge themselves under gravity, and a substantial residue remains below the level of the port, which can only be removed manually by physically inserting a hand through the port, engaging individual potatoes and removing them from the hopper.

Possible lowering of the position of the discharge port towards the distribution chamber and the outlet might improve the volume of potatoes which can be discharged under gravity during emptying of the hopper, but would have the disadvantage of providing abrasive resistance to generally smooth flow of potatoes at a "choke point" where the potatoes are funneled through the entrance to the distribution chamber and where they are therefore exposed to greater pressure.

The invention seeks to provide an improved means for discharging unused seed potatoes from the hopper of a potato planter and which is simple to operate, enables ready discharge under gravity of the hopper contents, but which exerts minimum abrasion to the potatoes during normal use. and which avoids the necessity to operate the planter unit.

According to the invention there is provided a potato planter which is intended to be attached to or to be towed behind the rear of a tractor or other propelling vehicle, and which comprises:
a hopper;
a distribution chamber at the lower end of the hopper to which potatoes can be fed under gravity discharge from the hopper;
an outlet leading from the distribution chamber; and,
a planter unit which comprises a train of potato lifter cups each movable upwardly through a potato receiving zone which communicates with said outlet in order to engage and to elevate a respective potato along an elevation run, to invert itself and then to pass down a descending run of the planter unit with a respective potato being discharged upon each inversion so as to fall onto the now upwardly facing surface of the preceding inverted cup and to discharge each potato under gravity to the ground upon transfer of each cup from the descending run to the elevation run; characterized in that
a guide is mounted at the lower end of the hopper for movement between a closed position in which it co-operates with the planter unit so as to permit the train of cups to move through the guide as they move to the potato receiving zone and substantially without risk of potatoes falling through the guide to the ground, and an open position in which the contents of the hopper can be discharged under gravity substantially without coming into contact with the cups of the planter unit.

The guide therefore is able to permit the potato planter to function satisfactorily during normal potato planting operations, when in its closed position, so that potatoes can pass smoothly through the distribution chamber and the outlet substantially without interference by the guide, but in which the guide is able to allow the contents of the distribution chamber (and therefore also of any residue in the hopper), to be discharged under gravity when the guide is moved to its open position.

The guide has a dual function, in smoothly guiding potatoes towards the cups of the planter unit when it is in its closed position, and also allowing movement of the cups through the guide, but in which in its open position it permits gravity discharge of virtually all unused potatoes in the hopper, apart from any potatoes which are located in the planter unit at the time of ceasing planting. Also, when the guide is in its closed position, it co-operates with the cups of the planter unit so as to prevent any potatoes falling onto the ground.

Conveniently, the guide is pivotally mounted on the hopper, and is arranged so that at least part of the guide forms a smooth prolongation of a bottom wall of the distribution chamber when the guide is in its closed position.

Preferably, the planter unit comprises two trains of potato lifter cups, of which the cups of one train are staggered relative to the cups of the other train. The guide is thus formed of a profile suitable to permit the cups of both trains to pass through the guide.

The guide may comprise a profiled metal plate, and preferably it is releasably coupled in its closed position by use of a spring clip arrangement.

The invention is applicable to a single row machine, in which case a single planter unit and associate guide will be provided. However, the invention is also applicable to a multi-row planter. in which case there will be a number of planter units corresponding to the number of rows to be planted at any one time by the potato planter. A corresponding number of guides will be provided. and preferably the guides are linked together for joint operation between their open and closed positions, to save time in separate operation of individual guides.

The potato planter may be adapted to be towed behind a tractor as a wheeled planter, or may be arranged to be mounted directly onto the rear of the tractor.

Generally, a corresponding furrow opener will be provided in front of the or each planter unit, and behind the planter unit there may be arranged covering-up disc coverers or ridging shovels.

One embodiment of potato planter according to the invention will now be described in detail, by way of example only, with reference to the accompanying drawings, in which:
Figure 1 is a side view of the potato planter;
Figure 2 is a side view showing a movable guide mounted on the lower end of a hopper of the potato planter shown in Figure 1;
Figure 3 is an end view of the guide shown in Figure 2;
Figure 4 is a sectional view taken on the section line AA in Figure 2;
Figure 5 shows a spring clip arrangement for holding the guide in a closed position on the hopper;
Figure 6 is a side view, similar to Figure 1, showing additional features of a potato planter according to the invention;
Figure 7 is a plan view of part of the planter shown in Figure 6;
Figure 8 is a detail view taken in the direction of arrow A in Figure 6; and,
Figure 9 is a detail view taken in the direction of arrow B in Figure 6.

Referring now to the drawings, there will be described, for simplicity, a single row potato planter, having a forwardly mounted furrow-opener, a hopper to be loaded with seed potatoes, and a planter unit arranged to receive a supply of potatoes from the hopper and to plant the potatoes one by one into the furrow formed by the furrow opener. However, it should be understood that the principles of this invention may be readily incorporated in multi-row potato planting machines.

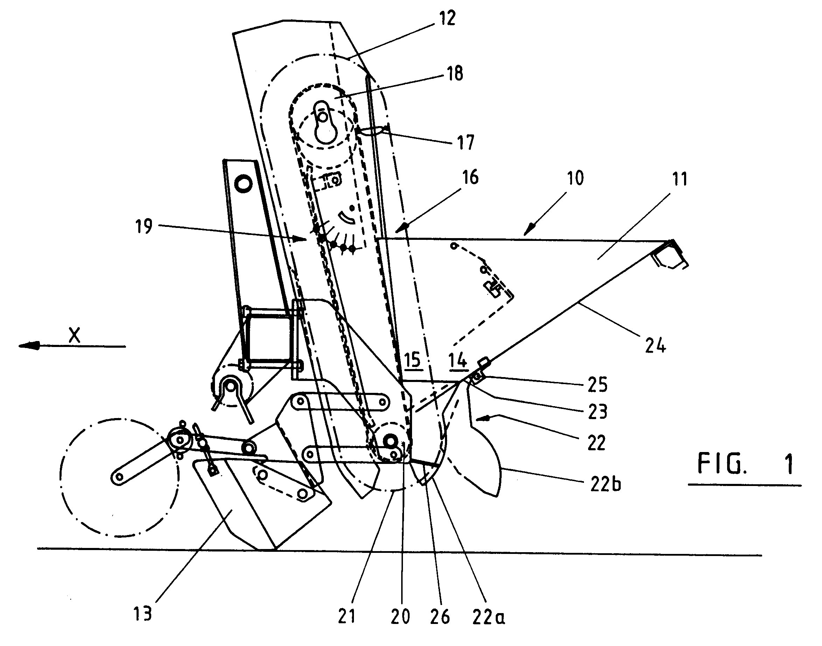

Referring first to Figure 1 of the drawings, the potato planter is designated generally by reference 10, and is intended to be mounted on a rear three point hitch of a tractor, and comprises a hopper 11, a planter unit 12 which co-operates with the hopper 11, and a furrow-opener 13 located forwardly of the planter unit 12 with respect to the direction of normal forward travel in the direction of the arrow X shown in Figure 1. The furrow opener 13 forms a furrow in the ground, and the planter unit 12 then delivers potatoes one by one at required spacings along the length of the furrow. An arrangement (not shown) of covering-up disc coverers or ridging shovels may be arranged behind the planter unit 12. below the hopper 11, to fill-in the furrows and earth-up the furrows into inverted V-shaped form.

A distribution chamber 14 is provided at the lower end of the hopper 11, to which potatoes can be fed under gravity discharge from the hopper 11, and an outlet leads from the distribution chamber 14 to a potato-receiving zone 15 of the planter unit 12.

The planter unit 12 may be of a known type used in the Underhaug 1400 range of potato planters. The planter unit 12 therefore comprises two trains of potato lifter cups which operate side by side in staggered relation, with each cup being movable upwardly through the potato receiving zone 15 to engage and to elevate a respective potato along an elevation run 16 of the planter unit 12. One of the cups is shown by reference 17 in Figure 1, near the upper end of its elevation run, and during this upward movement any excess potatoes are generally shaken-off, so that by the time each cup reaches the top of the run 16 it is only carrying a single seed potato. The cup 17 then passes over the upper end 18 of the planter unit and thereby inverts itself, prior to passing down a descending run 19 of the planter unit. During this inversion, the potato held by the cup 17 falls under gravity onto the now upwardly facing surface of the preceding inverted cup, and the row of inverted cups then pass down the descending run 19 until they reach the bottom end 20 where they are again returned to their original position prior to a renewed upward passage along the elevation run 16. Evidently, as each inverted cup 17 passes from run 19 to run 16, it will release the potato carried on its presently upper surface (which of course is the underface during movement up the elevation run 16) so that the potato can fall under gravity through a discharge outlet 21 and into the previously formed furrow.

Usually, there will be a pair of trains of potato cup lifters, with the cups of one train being staggered relative to the cups of the other train. The spacing apart of the cups can be altered, or their speed of operation adjusted, to enable variation in the separation of the planted potatoes.

A guide 22 is mounted at the lower end of the hopper 11 and has a closed position, designated by reference 22a, in which it co-operates with the planter unit 12 so as to permit the train of cups 17 to move through the guide as they move to the potato receiving zone 15. In addition, in this closed position, the guide 22 permits smooth movement of the potatoes along the distribution chamber 14, and it will be noted that the mounting portion 23 of the guide 22 forms a smooth prolongation of the surface of the inclined rear wall 24 of the hopper 11.

The spacing apart of the cups is such that as each cup first moves into the guide 22 (and thereby closes the bottom of a guide passage for potatoes in the guide) the adjacent cup leaves the guide passage with a potato on it. The cups therefore co-operate with the guide 22, when in the closed position, so that the guide passage will always be closed by one of the cups moving upwardly through it, so that there is no risk of potatoes falling through the guide and onto the ground.

The guide 22 can be moved from the position shown by reference 22a to an open position, designated by reference 23b, in which the unused contents of the hopper 11 and distribution chamber 14 can be discharged under gravity substantially without coming into contact with the cups of the planter unit 12.

The guide 22 therefore permits the potato planter 10 to function satisfactorily during normal potato planting operations, when it is in its closed position 22a, so that the seed potatoes can pass smoothly through the distribution chamber 14 and the outlet to the potato receiving zone 15 substantially without interference by the guide. However, in the open position of the guide, the unused contents can be readily discharged under gravity.

The guide 22 is pivotally mounted at the lower end of rear wall 24 on pivot 25 and, as mentioned above, at least part of the guide (23) forms a smooth prolongation of the inclined rear wall 24 and also of the bottom wall of the distribution chamber 14.

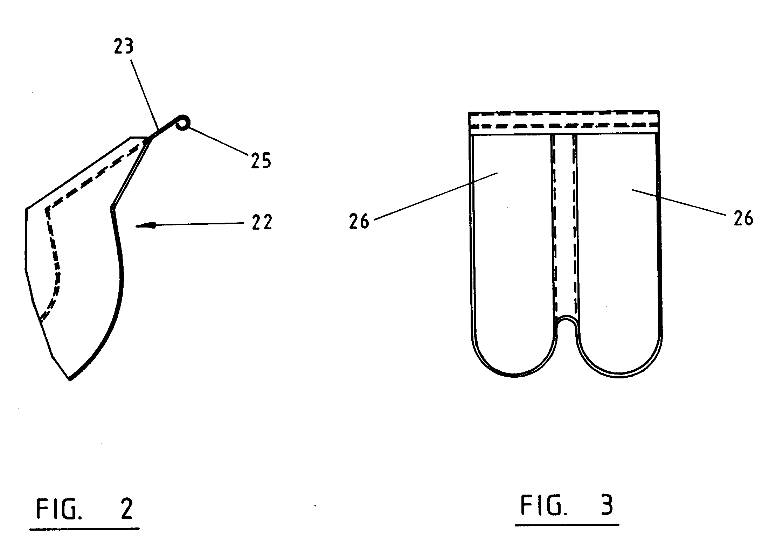

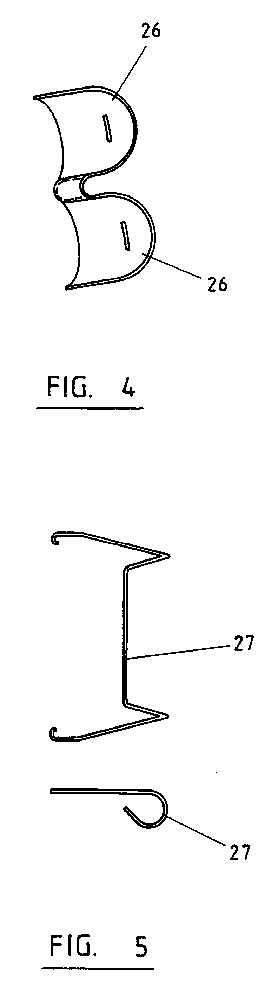

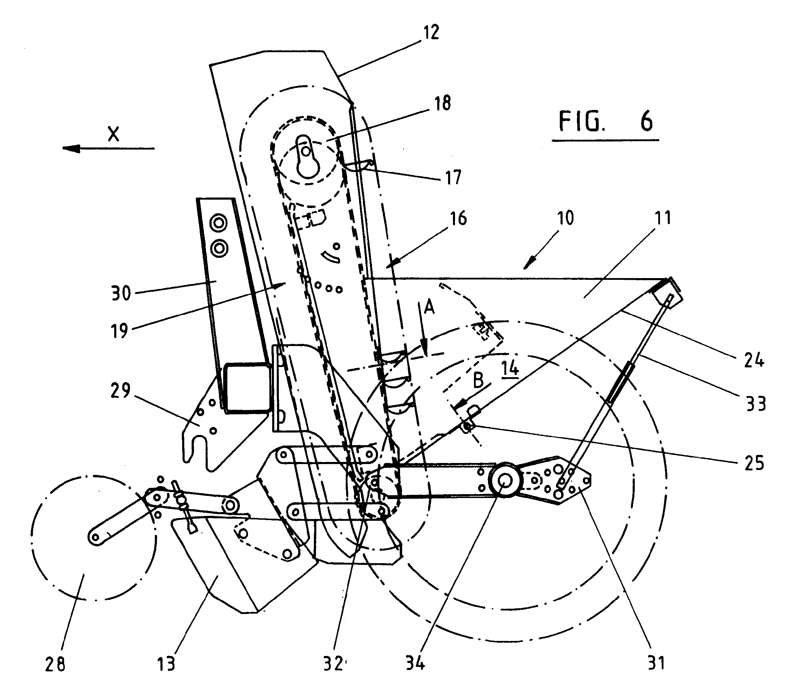

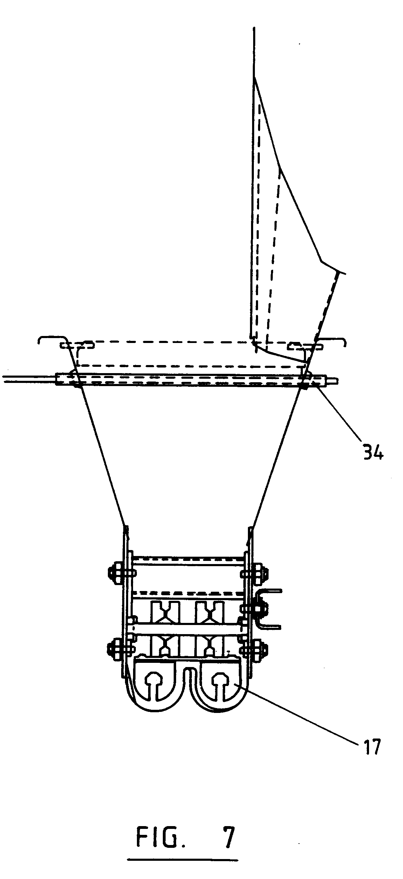

The constructional details of the guide 22 can be seen more clearly in Figures 2 to 4. The guide 22 comprises a profiled guide plate which is shaped to provide a pair of U-shaped guide profiles 26, and each of these is shaped so as to smoothly permit passage therealong of the cups of a respective one of the pair of trains of cups 17. Figure 5 shows a spring clip 27 which can be used to hold the guide 22 releasably in its closed position.

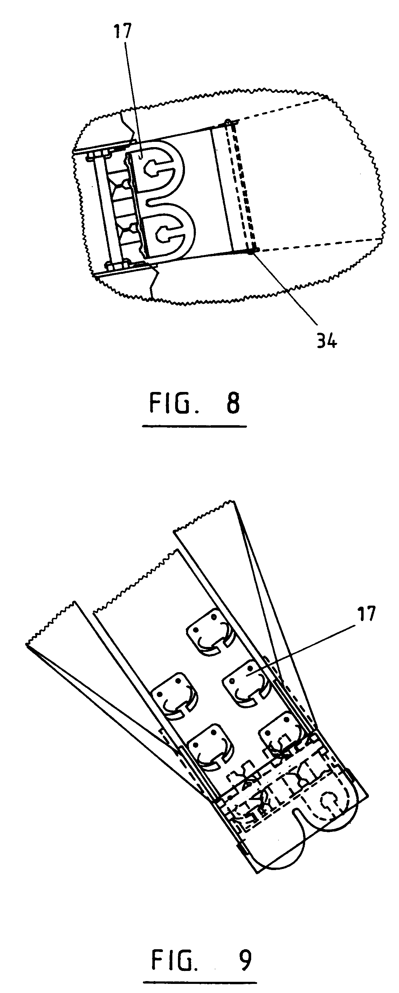

Referring now to Figures 6 to 9, this shows in more detail the upward path of travel of the cups 17, and also the manner by which the cups move upwardly through the guide 22. Thus, Figure 8 is a view looking down onto the cups 17 in the direction of arrow A in Figure 6, whereas Figure 9 is a view in the direction of the arrow B in Figure 6 looking down the distribution chamber 14 and towards the receiving zone 15 through which the cups 17 move upwardly in order to pick-up potatoes which are fed from the hopper 11 through chamber 14 and into the zone 15.

Figure 6 also shows some minor modifications from the planter shown in Figure 1, and also some additional features.

In particular, Figure 6 shows a forwardly mounted depth wheel 28 which is associated with the furrow opener 13, in order to control the depth of the furrow which is produced prior to planting of the potatoes in the furrow. Although not shown, furrow-closing and earthing-up devices will be arranged below the hopper 11. Figure 6 also shows mounting brackets 29 and support pillar 30 by means of which the potato planter can be mounted on the rear three point linkage of a tractor.

Figure 6 also shows a swing arm 31 which is pivoted at its forward end 32 under the action of a piston / cylinder arrangement 33 to enable the height of the planter to be altered by relatively raising or lowering a pair of ground wheels (not shown) mounted on an axle 34 carried by the swing arms 31. Figure 6 shows in dotted outline upper and lower adjusted positions of the swing arm 31, and also shows in dashed outline the profile which would be taken-up by a wheel mounted on axle 34 in the mid position of the swing arm 31.

As indicated above, the described embodiments comprise a single row potato planter, but evidently the features of the invention disclosed herein can readily be applied to a multi row machine, in which case the number of planter units and related equipment will correspond with the number of rows to be planted during each passage of the potato planter. When a multi row machine is provided, it will be advantageous for the individual guides associated with each planter unit to be linked together for common operation between their open and closed positions.

The described embodiment of potato planter therefore provides a simple, reliable and easy to operate machine, which can function very satisfactorily during normal potato planting operations. substantially without risk of giving damage or abrasion to the potatoes and tubers, but which can be operated to permit discharge of unused potatoes without requiring the potatoes to be handled individually by the planter unit. By providing the openable guide at the lowest part of the hopper, this gives very thorough removal of the unused potatoes under simple gravity action. Furthermore. this can be achieved in a way which gives less abrasion and damage to the potatoes, than is possible with the known arrangement of discharge port in the rear wall of the hopper. The potato planter of the invention also permits ready provision of suitable mechanism which permits remote control operation of the emptying mechanism, and also simultaneous opening of several planter units when a multi row machine is involved.

## Claims

1. A potato planter (10) which is intended to be attached to or towed behind the rear of a tractor or other propelling vehicle and which comprises:
a hopper (11);
a distribution chamber (14) at the lower end of the hopper (11) to which potatoes can be fed under gravity discharge from the hopper;
an outlet leading from the distribution chamber (14); and,
a planter unit (12) which comprises a train of potato lifter cups (17) each movable upwardly through a potato receiving zone (15) to engage and to elevate a respective potato along an elevation run (16), to invert itself and to pass down a descending run (19) of the planter unit (12) with a respective potato being discharged upon each inversion so as to fall onto the now upwardly facing surface of the preceding inverted cup and to discharge each potato under gravity to the ground upon transfer of each cup from the descending run (19) to the elevation run (16);
characterised in that a guide (22) is mounted at the lower end of the hopper (11) for movement between a closed position (22a) in which it co-operates with the planter unit (12) so as to permit the train of cups (17) to move through the guide (22) as they move to the potato receiving zone (15) and substantially without risk of potatoes falling through the guide to the ground, and an open position (22b) in which the contents of the hopper (11) can be discharged under gravity substantially without coming into contact with the cups (17) of the planter unit (12).

2. A potato planter according to Claim 1, in which the guide (22) is pivotally mounted (25) on the hopper (11) and is arranged so that at least part (23) of the guide forms a smooth prolongation of a bottom wall of the distribution chamber (14) when the guide is in its closed position (22a).

3. A potato planter according to Claim 1 or 2, in which the planter unit comprises two trains of potato lifter cups, of which the cups of one train are staggered relative to the cups of the other train, and the guide (22) is formed of a profile (26) suitable to permit the cups (17) of both trains to pass through the guide.

4. A potato planter according to Claim 3, in which the guide (22) comprises a profiled metal plate which is releasably coupled in its closed position (22a) by means of a spring clip arrangement (27).

5. A potato planter according to any one of Claims 1 to 4, in which the planter is a multi row planter having a plurality of planter units (12), and comprising a corresponding number of guides (22) associated one with each of the planter units.

6. A potato planter according to Claim 5, in which the guides (22) are jointly operable for movement between their open (22b) and closed positions (22a).

7. A potato planter according to any one of Claims 1 to 6, including a remote control operation for controlling the opening and closing of the or each guide (22).

## Patentansprüche

1. Kartoffellegemaschine (10) zum Befestigung an der oder zum Nachschleppen hinter der Rückseite eines Traktors oder eines anderen Zugfahrzeuges mit
a) einem Fülltrichter (11);
b) einer Verteilerkammer (14) am unteren Ende des Fülltrichters (11), welcher Kartoffeln durch Abgabe aus dem Fülltrichter unter dem Einfluß der Schwerkraft zugespeist werden können;
c) einem Auslaß, der aus der Verteilerkammer (14) führt; und
d) einer Legeeinheit (12), welche eine Folge von Kartoffelhubbechern (17) umfaßt, die jeweils durch eine Kartoffel-Aufnahmezone (15) nach oben bewegbar sind, derart, daß sie jeweils eine Kartoffel ergreifen und auf einer nach oben gerichteten Laufstrecke (16) nach oben anheben, sich dann umdrehen und auf einer nach unten gerichteten Laufstrecke (19) der Legeeinheit (12) nach unten laufen, wobei die jeweilige Kartoffel beim Umdrehen so abgegeben wird, daß sie auf die nunmehr nach oben zeigende Fläche des vorhergehenden, umgekehrten Bechers fallen, und daß jede Kartoffel unter dem Einfluß der Schwerkraft auf den Boden abgegeben wird, wenn der jeweilige Becher von der nach unten gerichteten Laufstrecke (19) auf die nach oben gerichtete Laufstrecke (16) überführt wird,
dadurch gekennzeichnet, daß eine Führung (22) am unteren Ende des Fülltrichters (11) so montiert ist, daß sie sich bewegen kann zwischen einer geschlossenen Position (22a), in der sie mit der Legeeinheit (12) so zusammenwirkt, daß sich die Folge von Bechern (17) durch die Führung (22) bei ihrer Bewegung in die Kartoffel-Aufnahmezone (15) hindurch bewegen kann, ohne daß dabei eine nennenswerte Gefahr bestünde, daß Kartoffeln durch die Führung auf den Boden fallen, und einer offenen Position (22b), in welcher der Inhalt des Fülltrichters (11) unter dem Einfluß der Schwerkraft ausgegeben werden kann, ohne daß er nennenswert in Berührung mit den Bechern (17) der Legeeinheit (12) gerät.

2. Kartoffellegemaschine nach Anspruch 1, dadurch gekennzeichnet, daß die Führung (22) an dem Fülltrichter (11) gelenkig montiert (25) und so eingerichtet ist, daß mindestens ein Teil (23) der Führung eine glatte Verlängerung der Bodenwand der Verteilerkammer (14) bildet, wenn die Führung in ihrer geschlossenen Position (22a) ist.

3. Kartoffellegemaschine nach Anspruch 1 oder 2, dadurch gekennzeichnet, daß die Legeeinheit zwei Folgen von Kartoffelhubbechern umfaßt, wobei die Becher der einen Folge gegenüber den Bechern der anderen Folge gestaffelt sind, und daß die Führung (22) aus einem Profil (26) gebildet ist, welches den Durchgang der Becher (17) beider Folgen durch die Führung gestattet.

4. Kartoffellegemaschine nach Anspruch 3, dadurch gekennzeichnet, daß die Führung (22) eine Metallprofilplatte umfaßt, welche mittels einer Federbügeleinrichtung (27) in ihrer geschlossenen Position (22a) lösbar angekoppelt ist.

5. Kartoffellegemaschine nach einem der Ansprüche 1 bis 4, dadurch gekennzeichnet, daß die Legemaschine eine Mehrreihen-Legemaschine mit einer Mehrzahl von Legeeinheiten (12) ist und eine entsprechende Anzahl von Führungen (22) umfaßt, von denen jeweils eine jeder Legeeinheit zugeordnet ist.

6. Kartoffellegemaschine nach Anspruch 5, dadurch gekennzeichnet, daß die Führungen (22) gemeinsam zur Bewegung zwischen ihrer offenen (22b) und geschlossenen (22a) Position betätigt werden können.

7. Kartoffellegemaschine nach einem der Ansprüche 1 bis 6, dadurch gekennzeichnet, daß sie eine Fernbedienung enthält, mit welcher das Öffnen und das Schließen der bzw. jeder Führung (22) steuerbar ist.

## Revendications

1. Planteuse de pommes de terre (10) destinée à être fixée ou remorquée à l'arrière d'un tracteur ou d'un autre véhicule moteur et qui comprend :
une trémie (11) ;
une chambre de distribution (14) à l'extrémité inférieure de la trémie (11), dans laquelle les pommes de terre peuvent arriver par déchargement par gravité à partir de la trémie ;
un déversoir guidant hors de la chambre de distribution (14) ; et
une unité formant planteuse (12) qui comprend un mécanisme à godets (17) transporteurs pour pomme de terre étant chacun capable de se déplacer vers le haut à travers une zone de réception (15) de pommes de terre pour prendre et pour élever une pomme de terre respective en suivant une course ascendante (16), pour ce renverser et passer sur une course descendante (19) de l'unité formant planteuse (12), une pomme de terre respective étant déchargée lors de chaque renversement, de manière à tomber sur la surface du godet précédent désormais orienté vers le haut et pour décharger chaque pomme de terre par gravité, sur le sol, en transférant chaque godet de la course descendante (19) sur la course ascendante (16),
caractérisée en ce qu'un guide (22) est monté à l'extrémité inférieure de la trémie (11) pour se déplacer entre une position fermée (22a), dans laquelle il coopère avec l'unité formant planteuse (12), afin de permettre au mécanisme à godets (17) de se déplacer à travers le guide (22), lorsque les godets passent vers la zone de réception (15) des pommes de terre et sensiblement sans risque pour les pommes de terre de chuter sur le sol, à travers le guide, et une position ouverte (22b) dans laquelle le contenu de la trémie (11) peut être déchargé par gravité sensiblement sans entrer en contact avec les godets (17) de l'unité formant planteuse (12).

2. Planteuse de pommes de terre selon la revendication 1, dans laquelle le guide (22) est monté (25) en pivot sur la trémie (11) et est conçu de manière telle qu'au moins la dernière pièce (23) du guide forme un léger prolongement d'une paroi formant fond de la chambre de distribution (14) lorsque le guide est dans sa position fermée (22a).

3. Planteuse de pommes de terre selon l'une quelconque des revendications 1 ou 2, dans laquelle l'unité formant planteuse comprend deux mécanismes à godets de transport de pommes de terre, dans lesquels les godets de l'un des mécanismes sont placés en quinconce par rapport à ceux de l'autre mécanisme à godets et le guide (22) est formé selon un profil (26) permettant le passage des deux mécanismes à godets à travers le guide.

4. Planteuse de pommes de terre selon la revendication 3, dans laquelle le guide (22) comprend une plaque de métal profilée qui est couplée de manière amovible dans sa position fermée (22a) au moyen d'un dispositif (27) formant pince à ressort.

5. Planteuse de pommes de terre selon l'une quelconque des revendications 1 à 4, dans laquelle la planteuse et une planteuse multi-rangs présentant une pluralité d'unités formant planteuses (12), et comprenant un nombre correspondant de guides (22) associés à chacune des planteuses.

6. Planteuse de pommes de terre selon la revendication 5, dans laquelle les guides (22) peuvent être actionnés conjointement pour se déplacer d'une position ouverte (22b) dans une position fermée (22a).

7. Planteuse de pommes de terre selon l'une quelconque des revendications 1 à 6 incluant un dispositif de contrôle à distance pour contrôler l'ouverture ou la fermeture de chaque guide (22).
